# EUROPEAN PATENT APPLICATION

(11) **EP 2 717 256 A2**
(43) Date of publication of application: **09.04.2014**
(21) Application number: 13161179.0
(22) Date of filing: 26.03.2013
(51) Int. Cl.: G10K 11/00

(54) **Ultrasonic sensor device and method for assembling the same**

(30) Priority: 08.10.2012 TW 101137107; 08.10.2012 TW 101219434
(71) Applicant: Tung Thih Electronic Co., Ltd., 33852 Luchu, Taoyuan County (TW)
(72) Inventor: Tsai, Tzu-Chin, 33852 Taoyuan County (TW); Lee, Shih-Feng, 33852 Taoyuan County (TW); Chang, Chiun-Hua, 33852 Taoyuan County (TW)
(74) Representative: Chettle, John Edward

(57) **Abstract**

An ultrasonic sensor device (1) includes a housing (2), a transducer (3), a securing unit (4), a circuit board (5) and a sealing cap (6). The housing (2) includes an enclosing portion (21). The enclosing portion (21) has a first opening (213) and an opposite second opening (214). The transducer (3) is secured to the enclosing portion (21) at the second opening (214). The securing unit (4) secures the transducer (3) to the enclosing portion (21) of the housing (2), and includes at least one securing rib (412) that extends toward the first opening (213) of the enclosing portion (21). The circuit board (5) is disposed in the enclosing portion (21). The sealing cap (6) is disposed to cover the first opening (213) of the enclosing portion (21) and has an inner cap surface that abuts against the securing rib (412) of the securing unit (4).

## Description

The invention relates to an ultrasonic sensor device serving as a proximity sensor in an automobile, and a method for assembling such a device.

Proximity sensors (e.g., for a collision avoidance system, a reverse system, etc.) have been widely incorporated into recently manufactured automobiles in order to provide drivers with better awareness of the driving environment.

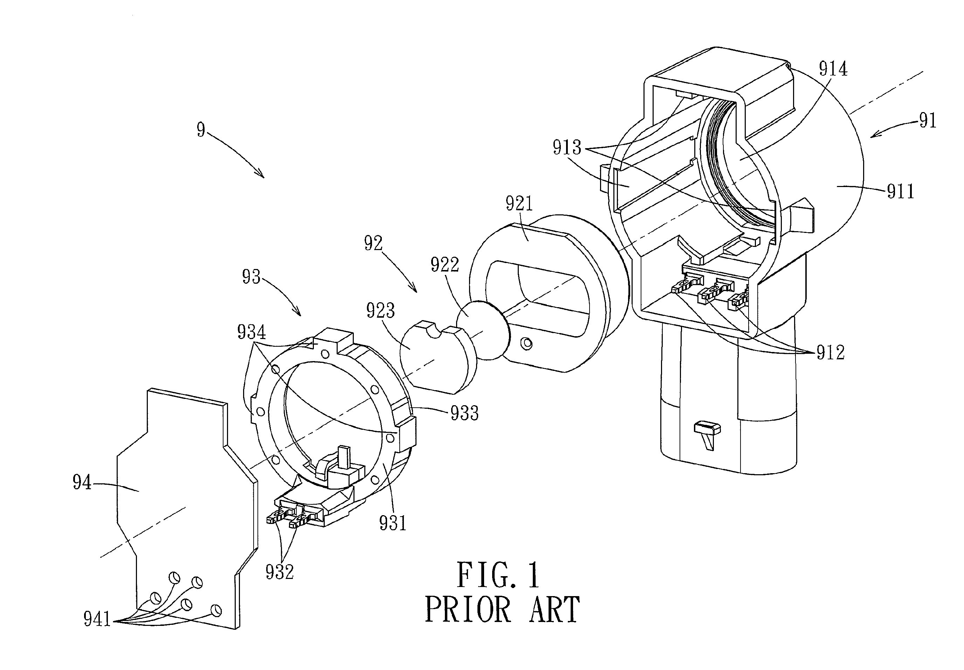

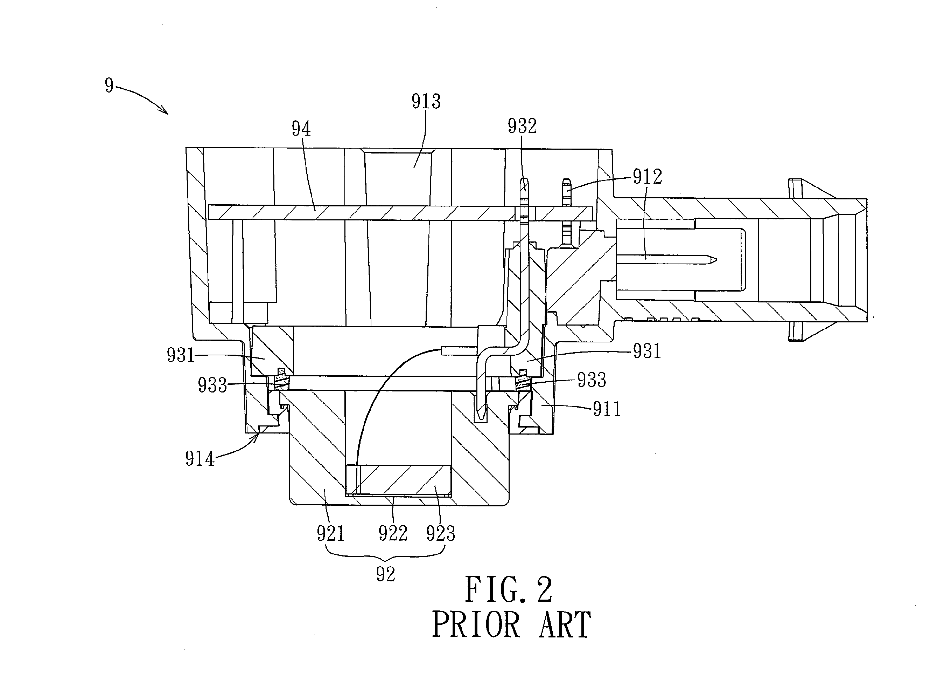

An ultrasonic sensor device is one of the more commonly used devices serving as the proximity sensors. Figures 1 and 2 illustrate such a conventional ultrasonic sensor device 9, which includes a housing 91, a transducer 92, a securing unit 93 and a circuit board 94.

The housing 91 includes an enclosing portion 911, an outer connecting pin set 912, and an opening 914. An inner surface of the enclosing portion 911 is formed with a plurality of slide grooves 913. The outer connecting pin set 912 permits external connection with to the circuit board 94.

The transducer 92 includes a shell 921, and includes a piezoelectric member 922 and a shock-absorbing member 923. The piezoelectric member 922 is disposed in the shell 921 for transceiving ultrasonic waves. The shock-absorbing member 923 is disposed to press against the piezoelectric member 922 in the shell 921 for absorbing external shocks, so as to absorb shock and thereby ensure stable operation of the piezoelectric member 922.

The transducer 92 is secured to the housing 91 at the opening 914. The securing unit 93 is disposed in the enclosing portion 911 to press the transducer 92 against the enclosing portion 911 of the housing 91, and is electrically connected to the circuit board 94 and the transducer 92.

Specifically, the securing unit 93 includes a securing component 931 that secures the transducer 92 to the enclosing portion 911 of the housing 91, an inner connecting pin set 932 disposed on the securing component 931 and electrically connected to the circuit board 94 and the piezoelectric member 922, and a resilient shock-absorbing component 933 disposed at the securing component 931 for abutting against the transducer 92. An outer surface of the securing component 931 is formed with a plurality of protruding blocks 934 each being registered with a respective one of the slide grooves 913.

The circuit board 94 is provided with a connecting hole set 941 for engaging and connecting electrically to the outer connecting pin set 912 and the inner connecting pin set 932.

Typically, the assembling of the conventional ultrasonic sensor device 9 involves applying adhesive material to joints between the slide grooves 913 and the protruding blocks 934 in order to secure the securing unit 93, and employing a liquid sealing component that fills the enclosing portion 911 to encapsulate the components of the ultrasonic sensor device 9 inside the enclosing portion 911.

However, such assembling technique has a number of drawbacks. For example, the securing unit 93 may be detached from the adhesive material during the assembling, resulting in a lower production yield. The sealing component requires a relatively long time period (usually longer than 24 hours) for solidification, and undesired chemical reactions may occur between the sealing component and the circuit board 94. As a result, the ultrasonic sensor device 9 thus assembled takes a longer amount of time to produce and reliability of operation thereof may be adversely affected.

Therefore, the object of the present invention is to provide an ultrasonic sensor device that can be assembled without the adhesive material or the sealing component, while retaining the securing effect and external shock resistance of the conventionally assembled ultrasonic sensor device.

Accordingly, an ultrasonic sensor device of the present invention comprises a housing, a transducer, a securing unit, a circuit board and a sealing cap.

The housing includes an enclosing portion and at least one outer connecting pin disposed in the enclosing portion. The enclosing portion has a first opening and a second opening that is opposite to the first opening and that is in spatial communication with the first opening.

The transducer is secured to the enclosing portion at the second opening.

The securing unit includes a securing component that is disposed in the enclosing portion and that secures the transducer to the enclosing portion, and at least one inner connecting pin disposed on the securing component and electrically connected to the transducer. The securing component includes at least one securing rib that extends toward the first opening of the enclosing portion.

The circuit board is disposed in the enclosing portion and is connected electrically to the inner and outer connecting pins.

The sealing cap is disposed to cover the first opening of the enclosing portion and has an inner cap surface that abuts against the securing rib of the securing component.

Another obj ect of the present invention is to provide a method for assembling the ultrasonic sensor device. The method comprises the following steps of:
(A) assembling a transducer to a housing, wherein the housing includes an enclosing portion and at least one outer connecting pin disposed in the enclosing portion, the enclosing portion having a first opening and a second opening that is opposite to the first opening and that is in spatial communication with the first opening, the transducer being assembled to the enclosing portion at the second opening;
(B) securing the transducer to the enclosing portion using a securing unit that is disposed in the enclosing portion, and connecting electrically at least one inner connecting pin of the securing unit to the transducer, wherein the securing unit has at least one securing rib that extends toward the first opening of the enclosing portion;
(C) disposing a circuit board in the enclosing portion and connecting electrically the circuit board to the inner connecting pin of the securing unit and the outer connecting pin of the housing; and
(D) disposing a sealing cap to cover the first opening of the enclosing portion in a manner that an inner cap surface of the sealing cap abuts against the securing rib of the securing unit.

Other features and advantages of the present invention will become apparent in the following detailed description of the preferred embodiment with reference to the accompanying drawings, of which:
Figure 1 is an exploded perspective view of a conventional ultrasonic sensor device;
Figure 2 is a sectional view of the conventional ultrasonic sensor device;
Figure 3 is an exploded perspective view of a preferred embodiment of an ultrasonic sensor device according to the invention;
Figure 4 is an assembled perspective view of the preferred embodiment;
Figure 5 is a sectional view taken along line V-V in Figure 4;
Figure 6 is a flowchart of a method for assembling the ultrasonic sensor device of the preferred embodiment;
Figure 7 is a top view illustrating a housing of the ultrasonic sensor device of the preferred embodiment;
Figure 8 is a sectional view taken along line VIII-VIII in Figure 7;
Figure 9 is a top view illustrating a transducer being assembled to the housing;
Figure 10 is a sectional view taken along line X-X in Figure 9;
Figure 11 is a top view illustrating a securing unit being disposed in the housing;
Figure 12 is a sectional view taken along line XII-XII in Figure 11;
Figure 13 is a top view illustrating a circuit board being disposed in the housing; and
Figure 14 is a sectional view taken along line XIV-XIV in Figure 13.

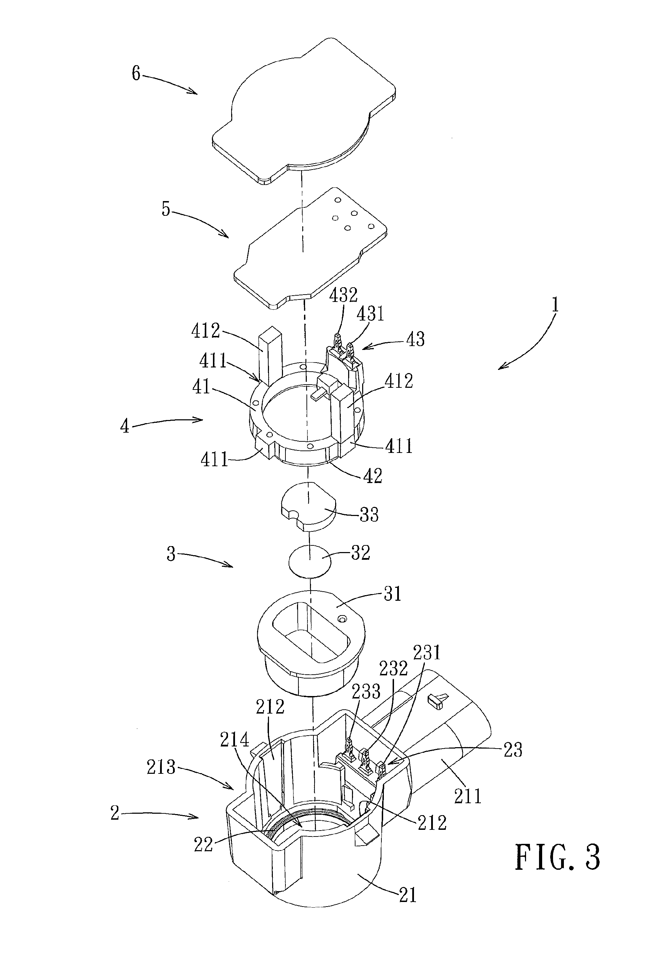

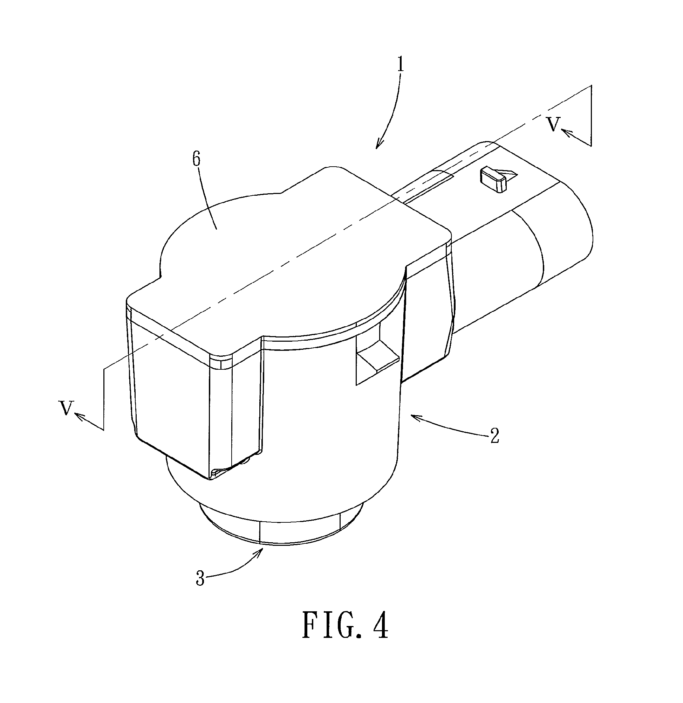

As shown in Figures 3 to 5, the preferred embodiment of an ultrasonic sensor device 1 according to the present invention can be, for example, used in an automobile as a proximity sensor. In other embodiments, however, the ultrasonic sensor device 1 can be implemented to suit various occasions.

The ultrasonic sensor device 1 comprises a housing 2, a transducer 3, a securing unit 4, a circuit board 5, and a sealing cap 6.

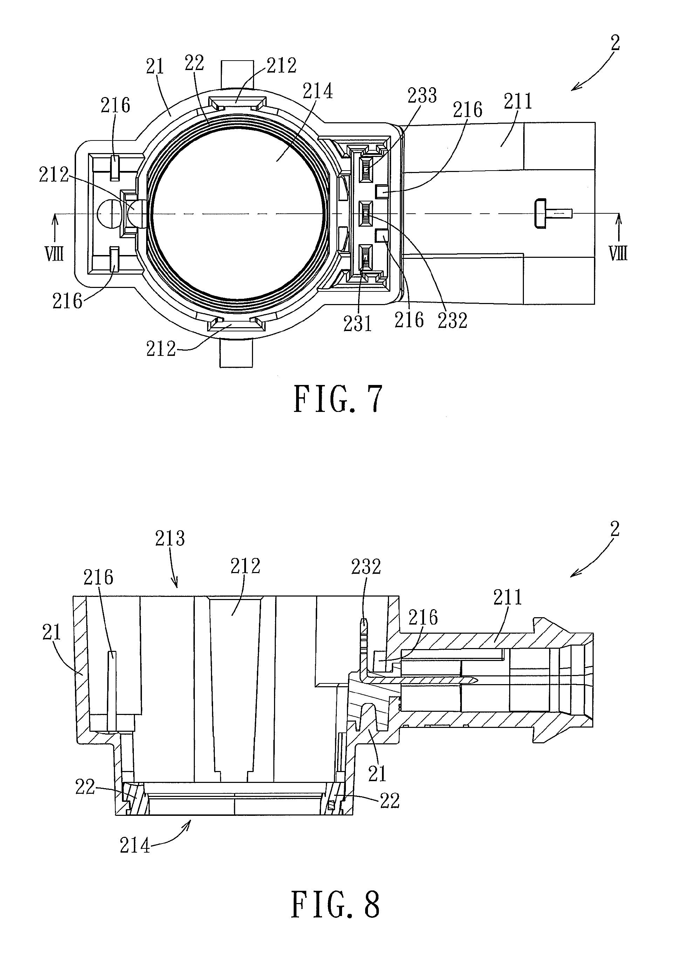

Further referring to Figures 7 and 8, the housing 2 is in a substantially cylindrical shape, and includes an enclosing portion 21, a resilient shock-absorbing ring 22, and an outer connecting pin set 23 disposed in the enclosing portion 21. In this embodiment, the outer connecting pin set includes three outer connecting pins 231 to 233.

The enclosing portion 21 is formed with a connecting tube portion 211 on an outer surface, three slide grooves 212 on an inner surface, a first opening 213, a second opening 214 that is opposite to the first opening 213 and that is in spatial communication with the first opening 213, and four positioning blocks 216. It is noted that various numbers of the slide grooves 212 and the positioning blocks 216 may be employed in other embodiments of this invention.

The resilient shock-absorbing ring 22 is made of, for example, rubber material, and is disposed at the second opening 214 of the enclosing portion 21 to contact and surround the transducer 3.

Each of the outer connecting pins 231 to 233 of the outer connecting pin set 23 has one end extending toward the first opening 213 for electrical connection with the circuit board 5, and another end extending into the connecting tube portion 211 for electrical connection with an external control circuit (not shown in the Figures). In this embodiment, each of the outer connecting pins 231 to 233 serves, respectively, as a ground pin, a signal transmitting pin, and a power transmitting pin. The positioning of the outer connecting pins 231 to 233 can be arranged as shown in Figure 7 (each pair of adjacent outer connecting pins are equally spaced apart), although various modifications can be employed in other embodiments of this invention.

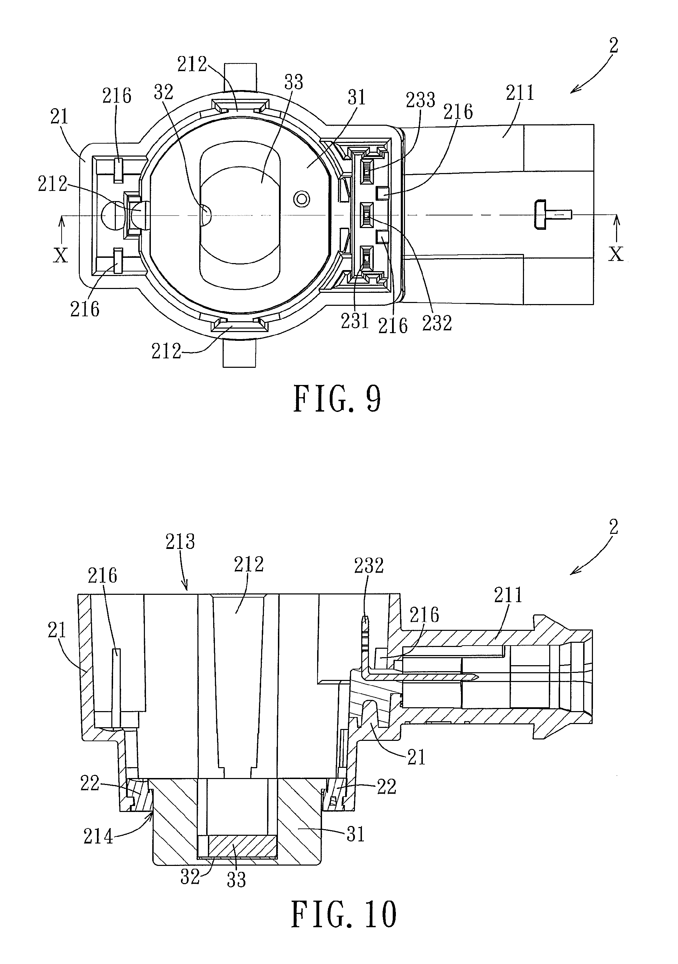

Further referring to Figures 9 and 10, the transducer 3 is secured to the enclosing portion 21 at the second opening 214, and includes a metal shell 31, a piezoelectric member 32 and a cushioning member 33. The piezoelectric member 32 is disposed in the shell 31, and is configured to generate and emit ultrasonic wave which is for measuring distance with nearby objects, and to receive the reflected ultrasonic wave for generating a sensing signal accordingly. The cushioning member 33 is made of a foam material, and is disposed in the receiving base 31 to press against the piezoelectric member 32 for absorbing external shock.

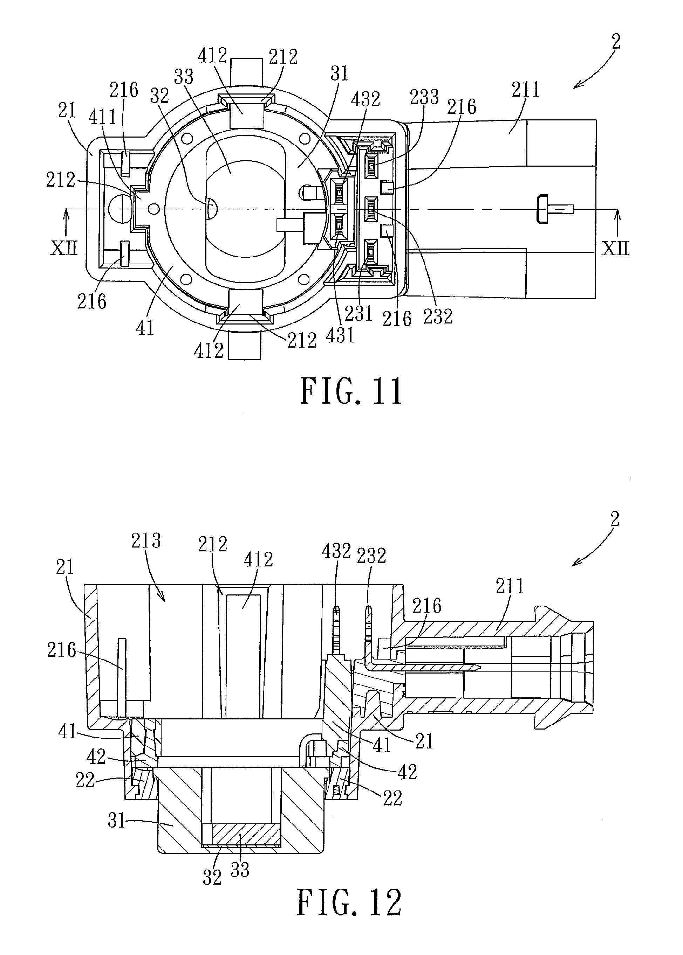

Further referring to Figures 11 and 12, the securing unit 4 includes a securing component 41, a resilient shock-absorbing component 42, and an inner connecting pin set 43 disposed on the securing component 41 and electrically connected to the transducer 3. In this embodiment, the inner connecting pin set includes two inner connecting pins 431 and 432.

The securing component 41 is disposed secures the transducer 3 to the enclosing portion 21, and includes three protruding blocks 411 and two securing ribs 412. Each of the three protruding blocks 411 is configured to engage slidably a respective one of the slide grooves 212. Each of the securing ribs 412 is registered with one of the protruding blocks 411, and extends toward the first opening 213 of the enclosing portion 21. It is noted that various numbers of the protruding blocks 411 and the securing ribs 412 may be employed in other embodiments of this invention.

The resilient shock-absorbing component 42 is disposed at the securing component 41 for abutting against the shell 31 of the transducer 3 and the resilient shock-absorbing ring 22, thereby securing the transducer 3 to the enclosing portion 21.

Each of the inner connecting pins 431 and 432 has one end electrically connected to the circuit board 5. Each of the inner connecting pins 431 and 432 further has another end that is electrically connected to the piezoelectric member 32 and the shell 31 of the transducer 3, respectively. As a result, the sensing signal generated by the piezoelectric member 32 can be transmitted to the circuit board 5 for processing.

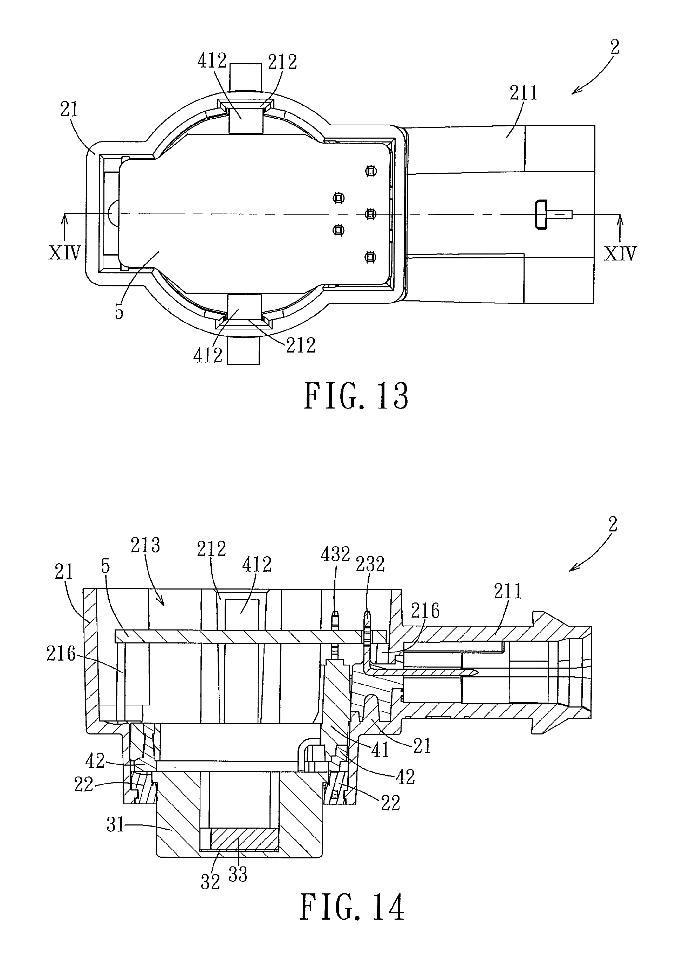

Further referring to Figures 13 and 14, the circuit board 5 is disposed on the positioning blocks 216 in the enclosing portion 21 adjacent to the first opening 213, and is connected electrically to ends of the inner and outer connecting pins 231 to 233, 431 and 432. Accordingly, the transducer 3 is electrically connected to the external control circuit via the circuit board 5.

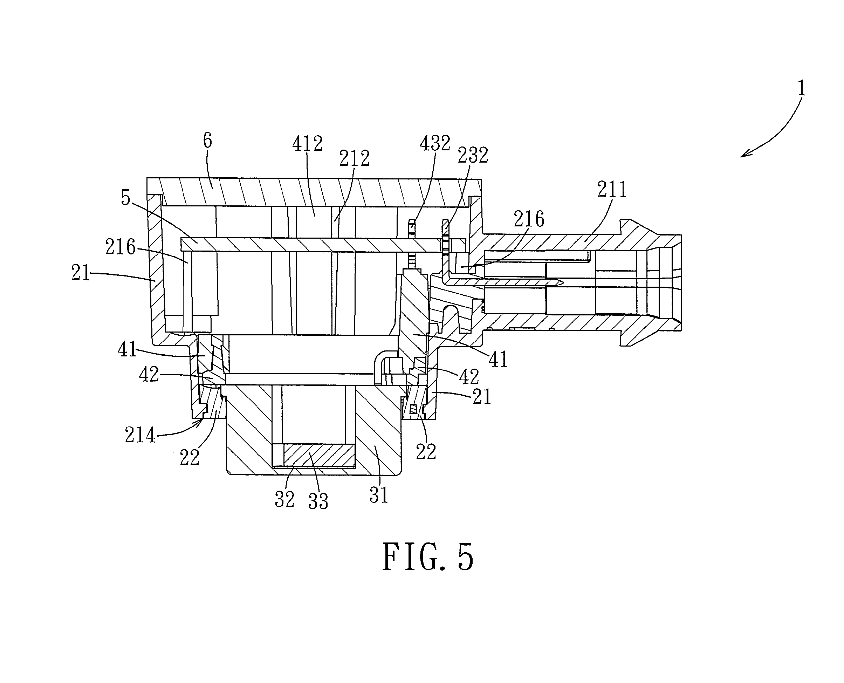

Referring back to Figure 5, the sealing cap 6 is disposed to cover the first opening 213 of the enclosing portion 21, and has an inner cap surface that abuts against the securing ribs 412 of the securing unit 4. Such abutment is able to prevent movement of the transducer 3 and the securing unit 4 relative to the enclosing portion 21.

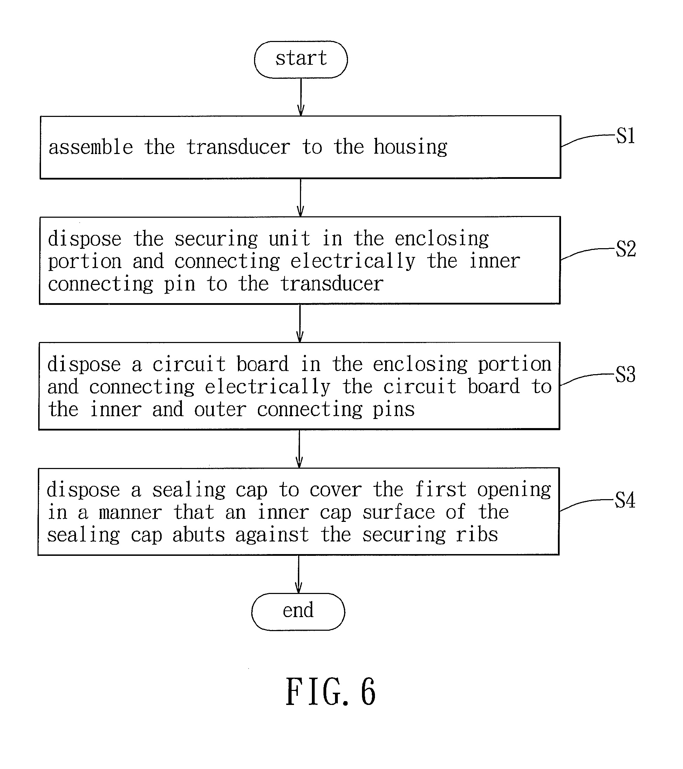

Referring to Figure 6, a method for assembling the ultrasonic sensor device 1 according to the preferred embodiment will now be described in the following paragraphs.

In step S1, the transducer 3 is assembled to the housing 2 at the second opening 214. Specifically, the transducer 3 is disposed in the enclosing portion 21 through the first opening 213 (see Figure 9), and a part of the transducer 3 projects out of the enclosing portion 21 through the second opening 214 (see Figure 10).

In step S2, the securing unit 4 is disposed in the enclosing portion 21, thereby securing the transducer 3 to the enclosing portion 21. Specifically, this is done by registering the protruding blocks 411 and the securing ribs 412 of the securing unit 4 with the slide grooves 212 at the first opening 213, and sliding the securing unit 4 into the enclosing portion 21 toward the second opening 214 until the resilient shock-absorbing component 42 abuts against the shell 31 of the transducer 3 and the resilient shock-absorbing ring 22 (see Figure 12). The inner connecting pins 431 and 432 are also connected to the transducer 3 in this step.

In step S3, the circuit board 5 is disposed in the enclosing portion 21 on the positioning blocks 216 adjacent to the first opening 213, and is connected electrically to the inner connecting pin set 23 of the securing unit 4 and the outer connecting pin set 43 of the housing 2 (see Figure 14).

In step S4, the sealing cap 6 is disposed at the housing 2 to cover the first opening 213 of the enclosing portion 21, in a manner that an inner cap surface of the sealing cap 6 abuts against the securing ribs 412 of the securing unit 4. This may further secure the securing unit 4 and the transducer 3 inside the enclosing portion 21. In this embodiment, the sealing cap 6 is connected to the housing 2 via one of ultrasonic welding and laser welding. The assembling method is subsequently completed.

To sum up, the ultrasonic sensor device 1 of this invention is provided with the securing ribs 412, such that the securing of the transducer 3 and the securing unit 4 can be achieved without needing to employ an adhesive material. Moreover, external shock resistance of the ultrasonic sensor device 1 is also enhanced, thereby eliminating the need for a liquid sealing component. As a result, the ultrasonic sensor device 1 can be produced in a more time efficient manner and with a relatively higher production yield.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all suchmodifications and equivalent arrangements.

## Claims

1. An ultrasonic sensor device (1), **characterized by**:
a housing (2) including an enclosing portion (21) and at least one outer connecting pin (231) disposed in said enclosing portion (21), said enclosing portion (21) having a first opening (213) and a second opening (214) that is opposite to said first opening (213) and that is in spatial communication with said first opening (213);
a transducer (3) that is secured to said enclosing portion (21) at said second opening (214);
a securing unit (4) including a securing component (41) that is disposed in said enclosing portion (21) and that secures said transducer (3) to said enclosing portion (21) of said housing (2), and at least one inner connecting pin (431) disposed on said securing component (41) and electrically connected to said transducer (3), said securing component (41) including at least one securing rib (412) that extends toward said first opening (213) of said enclosing portion (21);
a circuit board (5) disposed in said enclosing portion (21) and connected electrically to said inner and outer connecting pins (231, 431); and
a sealing cap (6) disposed to cover said first opening (213) of said enclosing portion (21) and having an inner cap surface that abuts against said securing rib (412) of said securing component (41).

2. The ultrasonic sensor device (1) of Claim 1, **characterized in that** one of an inner surface of said enclosing portion (21) and an outer surface of said securing component (41) is formed with a slide groove (212), and the other one of said inner surface of said enclosing portion (21) and said outer surface of said securing component (41) has a protruding block (411) configured to engage slidably said slide groove (212).

3. The ultrasonic sensor device (1) of Claim 2, **characterized in that** said inner surface of said enclosing portion (21) is formed with said slide groove (212), and said outer surface of said securing component (41) has said protruding block (411).

4. The ultrasonic sensor device (1) of Claim 3, **characterized in that**:
said outer surface of said securing component (41) has a pair of said protruding blocks (411) that are disposed opposite to each other;
said securing component (41) includes two of said securing ribs (412) each being registered with a respective one of said protruding blocks (411); and
said inner surface of said enclosing portion (21) is formed with a pair of said slide grooves (212), each being configured to engage slidably a respective one of said securing ribs (412) and a corresponding one of said protruding blocks (411).

5. The ultrasonic sensor device (1) of any one of Claims 1 to 4, **characterized in that** said housing (2) further includes a resilient shock-absorbing ring (22) disposed at said second opening (214) of said enclosing portion (21) and disposed to contact and surround said transducer (3).

6. The ultrasonic sensor device (1) of any one of Claims 1 to 5, **characterized in that** said securing unit (4) further has a resilient shock-absorbing component (42) disposed at said securing component (41) for abutting against said transducer (3).

7. The ultrasonic sensor device (1) of any one of Claims 1 to 6, **characterized in that** said sealing cap (6) is connected to said housing (2) via one of ultrasonic welding and laser welding.

8. A method for assembling an ultrasonic sensor device (1), **characterized by** the following steps of:
(A) assembling a transducer (3) to a housing (2), wherein the housing (2) includes an enclosing portion (21) and at least one outer connecting pin (231) disposed in the enclosing portion (21), the enclosing portion (21) having a first opening (213) and a second opening (214) that is opposite to the first opening (213) and that is in spatial communication with the first opening (213), the transducer (3) being assembled to the enclosing portion (21) at the second opening (214);
(B) securing the transducer (3) to the enclosing portion (21) using a securing unit (4) that is disposed in the enclosing portion (21), and connecting electrically at least one inner connecting pin (431) of the securing unit (4) to the transducer (3), wherein the securing unit (4) has at least one securing rib (412) that extends toward the first opening (213) of the enclosing portion (21);
(C) disposing a circuit board (5) in the enclosing portion (21) and connecting electrically the circuit board (5) to the inner connecting pin (431) of the securing unit (4) and the outer connecting pin (231) of the housing (2); and
(D) disposing a sealing cap (6) to cover the first opening (213) of the enclosing portion (21) in a manner that an inner cap surface of the sealing cap (6) abuts against the securing rib (412) of the securing unit (4).

9. The method of Claim 8, **characterized in that**, in step (A), the transducer (3) is disposed in the enclosing portion (21) through the first opening (213), and a part of the transducer (3) projects out of the enclosing portion (21) through the second opening (214).

10. The method of any one of Claims 8 and 9, **characterized in that**:
in step (A), an inner surface of the enclosing portion (21) is formed with at least one of a slide groove (212) and a protruding block (411);
the securing unit (4) is formed with the other one of the slide groove (212) and the protruding block (411) to engage slidably said one of the slide groove (212) and the protruding block (411); and
in step (B), the securing unit (4) is disposed in the enclosing portion (21) by registering the slide groove (212) with the protruding block (411) at the first opening (213), and sliding the securing unit (4) into the enclosing portion (21) toward the second opening (214).

11. The method of any one of Claims 8 to 10, **characterized in that**, in step (D), the sealing cap (6) is connected to the housing (2) via one of ultrasonic welding and laser welding.
